# EUROPÄISCHE PATENTANMELDUNG

(11) **EP 2 009 193 A1**
(43) Veröffentlichungstag der Anmeldung: **31.12.2008**
(21) Anmeldenummer: 07012736.0
(22) Anmeldetag: 28.06.2007
(51) Int. Cl.: E04F 13/06, E04B 1/76, B29C 47/02

(54) **Eckwinkel zur Kantenbewehrung und Verfahren zu seiner Herstellung**

(71) Anmelder: Weroform Profile GmbH & Co. KG, 74523 Schwäbisch Hall-Sulzdorf (DE)
(72) Erfinder: Becker, Silvan, 74535 Mainhardt (DE); Becker, Andreas, 74535 Mainhardt (DE); Linder, Harald, 86720 Nördlingen (DE)
(74) Vertreter: Wunderlich, Rainer

(57) **Zusammenfassung**

Die Erfindung betrifft einen Eckwinkel (10) zur Kantenbewehrung mit einem Winkelprofil (12) mit zwei Schenkeln (13,14) und mit mindestens einer Gewebematte (20). Die Gewebematte ist mit dem Winkelprofil verbunden und ragt über dessen Schenkel hinaus. Um eine stabile Eckbewehrung und präzise Eckgestaltung zu ermöglichen ist vorgesehen, dass die Gewebematte innen an dem Winkelprofil angeordnet ist.

## Beschreibung

Die Erfindung betrifft einen Eckwinkel zur Kantenbewehrung mit einem Winkelprofil mit zwei Schenkeln und mit mindestens einer Gewebematte, die mit dem Winkelprofil verbunden ist und über dessen Schenkel hinausragt.

Die Erfindung betrifft weiterhin ein Verfahren zur Herstellung eines Eckwinkels, bei dem ein Winkelprofil mit zwei Schenkeln mit mindestens einer Gewebematte verbunden wird.

Derartige Eckwinkel sind seit langem bekannt und dienen der Bewehrung einer den Sichtputz tragenden Mauerecke. Der Sichtputz kann dabei auf die äußere Wärmedämmschicht oder unmittelbar auf die gemauerten oder betonierten Gebäudewände aufgebracht werden. Um möglichst gerade und stoßgeschützte Ecken zu erhalten, werden Eckwinkel in den Eckbereichen an der äußeren Mauer- oder Wärmedämmschicht angeordnet und mit in den Putz eingearbeitet. Bekannte Eckwinkel weisen ein Winkelprofil auf, dessen Schenkel im Wesentlichen einen Winkel von 90° einschließen. An dem Winkelprofil ist ein Gewebestreifen befestigt, der über die freien Längskanten der Schenkel hinausragt, um so den Anschluss an eine großflächige Putzbewehrung zu vermitteln.

Bei bekannten Eckwinkeln ist das Gewebe meist durch Verkleben an dem Winkelprofil angebracht. Die EP-A-0 915 215 beschreibt einen Eckwinkel, bei dem ein Gewebestreifen durch eine anextrudierte Abzugsleiste an dem Winkelprofil befestigt ist.

Eckwinkel sind in eingebautem Zustand großen Spannungen ausgesetzt. Bekannte Eckwinkel, die eine präzise und sichere Eckgestaltung ermöglichen, sind relativ aufwändig hinsichtlich Aufbau und Herstellung.

Es ist daher die **Aufgabe** der vorliegenden Erfindung, einen Eckwinkel zu schaffen, der bei einfacher Herstellung eine möglichst stabile Eckbewehrung und präzise Eckgestaltung ermöglicht. Eine weitere Aufgabe der Erfindung ist es, ein Verfahren zur Herstellung eines solchen Eckwinkels anzugeben.

Die Aufgabe wird dadurch gelöst, dass die Gewebematte innen an dem Winkelprofil angeordnet ist.

Die Erfindung beruht auf der Erkenntnis, dass es für eine möglichst stabile und zuverlässige Eckbewehrung förderlich ist, wenn der Eckwinkel selbst stabil aufgebaut ist und insbesondere den in der Putzschicht auftretenden Spannungen standhält.

Ein Grundgedanke der Erfindung kann darin gesehen werden, eine besonders innige Verbindung der Gewebematte mit einer unterhalb des Eckwinkels liegenden Materialschicht zu ermöglichen. Die Materialschicht kann beispielsweise aus einem Kleber oder einem Mörtel bestehen, mit dem der Eckwinkel auf der äußeren Wärmedämmschicht eines Mauerwerks befestigt wird. Durch die innige Verbindung der Gewebematte mit der äußeren Materialschicht kann der Eckwinkel besonders zuverlässig an einer Ecke festgelegt werden.

Ein weiterer Grundgedanke der Erfindung kann darin gesehen werden, dass durch die innenseitige Anordnung der Gewebematte eine verbesserte Verbindung der Gewebematte zu den sich anschließenden großflächigen Bewehrungsmatten erreicht werden kann. Die großflächigen Bewehrungsmatten, welche ebenfalls auf der äußeren Materialschicht einer Wand angeordnet werden, können so bis direkt an die Längskanten des Winkelprofils heranreichen und mit der Gewebematte großflächig überlappen.

Aufgrund der innenseitig am Winkelprofil angeordneten Gewebematte wird diese durch Spannungen innerhalb einer auf den Eckwinkel aufzubringenden Putzschicht nicht von dem Winkelprofil gelöst. Derartige Spannungen treten auf, da die äußere Putzschicht großen Temperatur- und Witterungsschwankungen ausgesetzt ist.

Gemäß der Erfindung ist die Gewebematte nicht freiliegend außen, sondern geschützt innen am Winkelprofil angeordnet. Hierdurch ist sie während eines Verputzvorganges davor geschützt, durch die während des Verputzens auftretenden Schubkräfte von dem Winkelprofil gelöst zu werden.

Der erfindungsgemäßen Eckwinkel erlaubt es, auf vergleichsweise einfache Weise beim Verputzen eine präzise und definierte Außenecke, z.B. von 90°, herzustellen. Durch die innenseitige Anordnung der Gewebematte ist die äußere Kante des Eckwinkels frei von jeglicher Beeinträchtigung durch die Gewebematte. Die Kante des Eckwinkels ist somit besonders glatt und ermöglicht hierdurch die Gestaltung einer präzisen und glatten Außenecke mit einem geradlinigen Kantenverlauf.

Für ein verbessertes Anlegen des Eckwinkels an eine Ecke oder Kante ist vorgesehen, dass im Eckbereich des Winkelprofils ein etwa U-förmiger Aufnahmeraum zur Aufnahme eines Teils der Gewebematte ausgebildet ist. Dieser ist zur Innenseite des Winkelprofils hin offen. Die Gewebematte wird durch diese Öffnung schlaufenartig durch den U-förmigen Aufnahmeraum geführt. Hierdurch wird eine offene Innenkante des Winkelprofils erreicht. Insbesondere wird ein Abrunden der Innenkante des Winkelprofils durch die Gewebematte verhindert. Der Eckwinkel kann somit auch an eine scharfkantige Ecke oder Kante sicher angelegt werden. Der Aufnahmeraum ist besonders in Verbindung mit einer weniger flexiblen Gewebematte geeignet.

Besonders zweckmäßig ist es, dass der Aufnahmeraum in einer Auswölbung angeordnet ist, welche als Abzugskante ausgebildet ist. Eine solche an sich bekannte Abzugskante für eine auf den Eckwinkel aufzubringende Putzschicht dient insbesondere dazu, eine definierte geradlinige Kante bzw. Ecke herzustellen. Zusätzlich gewährleistet die Abzugskante einen verbesserten Stoßschutz. Durch die Anordnung des Aufnahmeraums innerhalb der Abzugskante werden zwei Elemente des Eckwinkels sinnvoll kombiniert. Grundsätzlich kann die Form der Auswölbung beliebig gewählt werden. Besonders bevorzugt ist es jedoch, dass die Auswölbung eine etwa U-förmige Außenkontur aufweist, die der gewünschten Form der Ecke entspricht.

Die Stabilität des erfindungsgemäßen Eckwinkels wird dadurch verbessert, dass der Aufnahmeraum zur Fixierung der Gewebematte mindestens einen Vorsprung aufweist. Durch Witterungs- oder Temperaturschwankungen können nicht nur in der Putzschicht, sondern auch in der Gebäudeecke Spannungen auftreten. Diese können auf die Gewebematte übertragen werden. Um die Fixierung der Gewebematte mit dem Winkelprofil durch Formschluss zu verbessern, kann diese daher in die hakenförmigen Vorsprünge eingreifen. Da die größten Spannungen direkt in der Ecke einer Wand auftreten, ist es besonders vorteilhaft, die hakenförmigen Vorsprünge innerhalb des Aufnahmeraums vorzusehen.

Zur Verbesserung der Fixierung der Gewebematte an dem Winkelprofil ist es nach der Erfindung besonders bevorzugt, dass der Aufnahmeraum mit der eingesetzten Gewebematte mit einem Füllelement versehen ist. Hierdurch kann ein besonders stabiler Eckwinkel erreicht werden. Durch das Füllelement ist die Gewebematte materialschlüssig mit dem Winkelprofil verbunden. Somit können auch größere Spannungen in der Gebäudewand von dem Gewebe aufgenommen werden, ohne dass sich dieses vom Winkelprofil löst. Durch die vollständige Einbettung eines Teils der Gewebematte in dem Füllelement ist die Fixierung besonders fest. Um ein Lösen des gesamten Füllelements aus dem Aufnahmeraum zu verhindern, kann vorgesehen sein, dass der Aufnahmeraum nach innen eingeschnürt ist.

In einer vorteilhaften Ausgestaltung der Erfindung ist vorgesehen, dass das Füllelement ein extrudiertes Material, insbesondere Hart- oder Weich-PVC aufweist. Das Füllelement kann insbesondere aus dem gleichen Material wie das Winkelprofil oder aus einem anderen Material gebildet sein. Eine besonders innige Verbindung des Füllelements sowohl mit dem Winkelprofil als auch mit der Gewebematte kann dadurch erreicht werden, dass das Füllelement mit dem Winkelprofil koextrudiert wird.

Eine weitere Verbesserung der Verbindung der Gewebematte mit dem Winkelprofil wird dadurch erreicht, dass die Gewebematte an den Schenkeln des Winkelprofils fixiert, insbesondere verklebt ist. Hierdurch wird eine zusätzliche Stabilität des Eckprofils erreicht.

Nach der Erfindung ist es weiterhin bevorzugt, dass die Schenkel des Winkelprofils Löcher aufweisen. Durch die Löcher kann das Winkelprofil an einer Mauerecke, beispielsweise durch Nageln, befestigt werden. Außerdem stellen die Löcher eine Verbindung bzw. Vermittlung zwischen der Oberfläche, auf die das Winkelprofil aufgesetzt ist, und der aufzubringenden Putzschicht dar. Somit kann eine Klebeschicht von innen nach außen sowie Putz von außen nach innen gelangen, wodurch der Eckwinkel besonders sicher fixiert ist.

Eine Weiterbildung des erfindungsgemäßen Eckwinkels ist dadurch gegeben, dass das Winkelprofil ein extrudiertes Material aufweist. Die Fertigung des Winkelprofils aus einem extrudierten Material macht den Eckwinkel besonders wirtschaftlich. Ein Winkelprofil aus einem extrudierten Material ist besonders dann bevorzugt, wenn das Füllelement ebenfalls ein extrudierbares Material aufweist.

Das Verfahren zur Herstellung eines Eckwinkels ist dadurch gekennzeichnet, dass die Gewebematte innen an dem Winkelprofil angeordnet wird.

Dabei ist es besonders bevorzugt, dass ein Teil der Gewebematte in einem im Eckbereich des Winkelprofils ausgebildeten Aufnahmeraum angeordnet wird und dass der Aufnahmeraum mit der eingesetzten Gewebematte mit einem Füllelement versehen wird. Hierdurch ergeben sich die oben beschriebenen Vorteile bezüglich der Stabilität des Eckwinkels. Das Füllelement kann eine starre Leiste oder eine flexible Schnur sein.

Ein besonders wirtschaftliches Verfahren ist dadurch gegeben, dass das Winkelprofil in einem Extrusionsverfahren hergestellt wird, dass anschließend ein Teil der Gewebematte in dem Aufnahmeraum angeordnet wird und dass das Füllelement in den Aufnahmeraum koextrudiert wird. Dabei ist es besonders bevorzugt, dass der Teil der Gewebematte in den Aufnahmeraum eingebracht wird, nachdem das Winkelprofil so weit erkaltet ist, dass es formstabil ist, jedoch bevor es vollständig erkaltet ist. Um eine gute Verbindung des Füllelements mit dem Winkelprofil zu erhalten, wird das Winkelprofil nach Einlegen der Gewebematte erneut erwärmt und dann das Füllelement in einem pastösen oder schmelzflüssigen Zustand in den Aufnahmeraum extrudiert. Für die Extrusion des Füllelements kann insbesondere die gleiche Vorrichtung wie für die Extrusion des Winkelprofils verwendet werden.

Die Erfindung wird weiter anhand einer bevorzugten Ausführungsvariante, welche in den beiliegenden Figuren schematisch dargestellt ist, erläutert.

In den Figuren zeigt:
- Fig. 1: eine schematische Darstellung eines erfindungsgemäßen Eckwinkels und
- Fig. 2: einen Eckwinkel nach dem Stand der Technik.

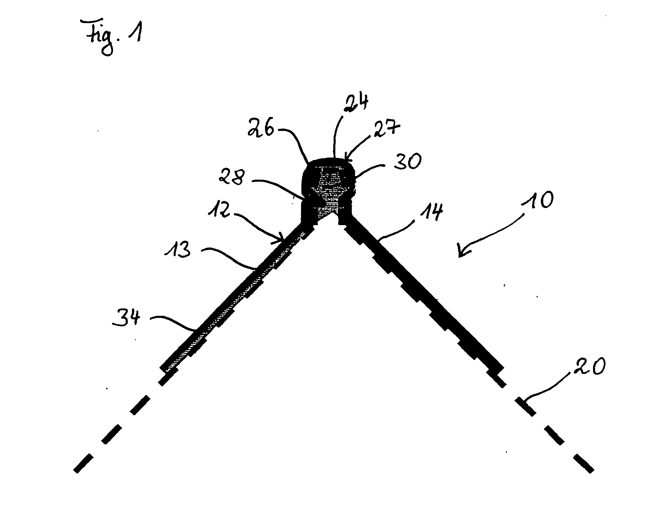

Gemäß Fig. 1 ist ein Eckwinkel 10 zumindest aus einem Winkelprofil 12 und einer Gewebematte 20 gebildet. Das Winkelprofil 12 weist einen ersten Schenkel 13 und einen zweiten Schenkel 14 auf, die im Wesentlichen rechtwinklig zueinander angeordnet sind. Die Breite der Schenkel 13 und 14 beträgt etwa 2 bis 3 cm. Im Eckbereich der beiden Schenkel 13 und 14 ist ein als Abzugskante ausgebildeter Vorsprung angeordnet. Dieser ist als Auswölbung 26 ausgebildet, welche mit den beiden Schenkeln 13 und 14 eine Einheit bildet. Die Auswölbung 26 hat einen etwa U-förmigen Querschnitt und weist eine entsprechend gekrümmte Außenfläche 27 auf. Im Inneren der Auswölbung 26 ist ein Aufnahmeraum 24 ausgebildet, durch den die Gewebematte 20 schlaufenartig geführt ist. Die Gewebematte 20 liegt dabei im Wesentlichen an einer Innenfläche der Auswölbung 26 an. Zur materialschlüssigen Fixierung der Gewebematte 20 in dem Aufnahmeraum 24 ist dieser mit einem Füllelement 30 verfüllt, in welchem der schlaufenartige Teil der Gewebematte 20 vollständig aufgenommen bzw. eingebettet ist. Das Füllelement 30 wurde mittels Koextrusion in den Aufnahmeraum 24 eingebracht. Die Gewebematte 20 ist außerdem durch einen hakenartigen Vorsprung 28, welcher als etwa dreieckförmige Nase ausgebildet ist, in dem Aufnahmeraum 24 formschlüssig gehalten. Zur zusätzlichen Fixierung der Gewebematte 20 an dem Winkelprofil 12 ist die Gewebematte 20 durch eine Klebstoffschicht 34 innenseitig an dem ersten Schenkel 13 des Winkelprofils 12 verklebt.

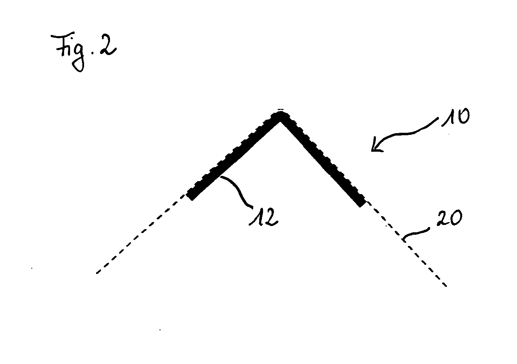

Fig. 2 zeigt einen Eckwinkel 10 nach dem Stand der Technik, bei dem eine Gewebematte 20 an den Außenflächen eines Winkelprofils 12 angeordnet, insbesondere verklebt ist.

## Patentansprüche

1. Eckwinkel (10) zur Kantenbewehrung mit einem Winkelprofil (12) mit zwei Schenkeln (13, 14) und mit mindestens einer Gewebematte (20), die mit dem Winkelprofil (12) verbunden ist und über dessen Schenkel (13, 14) hinausragt,
**dadurch gekennzeichnet,**
**dass** die Gewebematte (20) innen an dem Winkelprofil (12) angeordnet ist.

2. Eckwinkel (10) nach Anspruch 1,
**dadurch gekennzeichnet,**
**dass** im Eckbereich des Winkelprofils (12) ein etwa U-förmiger Aufnahmeraum (24) zur Aufnahme eines Teils der Gewebematte (20) ausgebildet ist.

3. Eckwinkel (10) nach Anspruch 2,
**dadurch gekennzeichnet,**
**dass** der Aufnahmeraum (24) in einer Auswölbung (26) angeordnet ist, welche als Abzugskante ausgebildet ist.

4. Eckwinkel (10) nach einem der Ansprüche 2 oder 3,
**dadurch gekennzeichnet,**
**dass** der Aufnahmeraum (24) zur Fixierung der Gewebematte (20) mindestens einen Vorsprung (28) aufweist.

5. Eckwinkel (10) nach einem der Ansprüche 2 bis 4,
**dadurch gekennzeichnet,**
**dass** der Aufnahmeraum (24) mit der eingesetzten Gewebematte (20) mit einem Füllelement (30) versehen ist.

6. Eckwinkel (10) nach Anspruch 5,
**dadurch gekennzeichnet,**
**dass** das Füllelement (30) ein extrudiertes Material, insbesondere Hart- oder Weich-PVC umfasst.

7. Eckwinkel (10) nach einem der vorangehenden Ansprüche,
**dadurch gekennzeichnet,**
**dass** die Gewebematte (20) an den Schenkeln (13, 14) des Winkelprofils (12) fixiert, insbesondere verklebt ist.

8. Eckwinkel (10) nach einem der vorangehenden Ansprüche,
**dadurch gekennzeichnet,**
**dass** das Winkelprofil (12) ein extrudiertes Material aufweist.

9. Eckwinkel (10) nach einem der vorangehenden Ansprüche,
**dadurch gekennzeichnet,**
**dass** die Schenkel (13, 14) des Winkelprofils (12) Löcher aufweisen.

10. Verfahren zur Herstellung eines Eckwinkels (10), insbesondere nach einem der Ansprüche 1 bis 9,
bei dem ein Winkelprofil (12) mit zwei Schenkeln (13, 14) mit mindestens einer Gewebematte (20) verbunden wird,
**dadurch gekennzeichnet,**
**dass** die Gewebematte (20) innen an dem Winkelprofil (12) angeordnet wird.

11. Verfahren nach Anspruch 10,
**dadurch gekennzeichnet,**
**dass** ein Teil der Gewebematte (20) in einem im Eckbereich des Winkelprofils (12) ausgebildeten Aufnahmeraum (24) angeordnet wird und
**dass** der Aufnahmeraum (24) mit der eingesetzten Gewebematte (20) mit einem Füllelement (30) versehen wird.

12. Verfahren nach Anspruch 11,
**dadurch gekennzeichnet,**
**dass** das Winkelprofil (12) in einem Extrusionsverfahren hergestellt wird,
**dass** anschließend ein Teil der Gewebematte (20) in dem Aufnahmeraum (24) angeordnet wird
und **dass** das Füllelement (30) in den Aufnahmeraum (24) hinein koextrudiert wird.
